(19) **Europäisches Patentamt European Patent Office Office européen des brevets**

(11) **EP 4 154 036 B1**

(12) **FASCICULE DE BREVET EUROPEEN**

(45) Date de publication et mention de la délivrance du brevet:
**24.12.2025  Bulletin 2025/52**

(21) Numéro de dépôt: **21740147.0**

(22) Date de dépôt: **21.06.2021**

(51) Classification Internationale des Brevets (IPC):
***G01T 1/167*** *(2006.01)*

(52) Classification Coopérative des Brevets (CPC):
**G01T 1/167**

(86) Numéro de dépôt international:
**PCT/FR2021/051121**

(87) Numéro de publication internationale:
**WO 2021/260313 (30.12.2021 Gazette 2021/52)**

(54) **SYSTÈME POUR CORRÉLER DES MESURES DE SPECTROMÉTRIE ALPHA ET GAMMA POUR LA CARACTÉRISATION RADIOLOGIQUE IN SITU D'UN ÉCHANTILLON**

SYSTEM ZUR KORRELATION VON ALPHA- UND GAMMA-SPEKTROMETRIEMESSUNGEN ZUR IN-SITU-RADIOLOGISCHEN CHARAKTERISIERUNG EINER PROBE

SYSTEM FOR CORRELATING ALPHA AND GAMMA SPECTROMETRY MEASUREMENTS FOR IN SITU RADIOLOGICAL CHARACTERISATION OF A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2020  FR 2006506**

(43) Date de publication de la demande:
**29.03.2023  Bulletin 2023/13**

(73) Titulaire: **Commissariat à l'Energie Atomique et aux Energies Alternatives 75015 Paris (FR)**

(72) Inventeurs:
- **VENARA, Julien 30131 PUJAUT (FR)**
- **DEGRELLE, Deborah 84860 CADEROUSSE (FR)**
- **BEN MOSBAH, Mehdi 04220 SAINT TULLE (FR)**
- **LECONTE, Marc 84100 ORANGE (FR)**

(74) Mandataire: **Santarelli Tour Trinity 1 bis Place de la Défense 92400 Courbevoie (FR)**

(56) Documents cités:
EP-A1- 3 204 795      JP-A- 2013 190 328
KR-B1- 102 042 277    US-A- 5 444 746

- YVON CHARLES: "Manuel d'utilisation: Perceuse d'établi", 25 June 2012 (2012-06-25), XP055844708, Retrieved from the Internet <URL:https://www.metiers-et-passions.com/waroot/METP/fr_FR/attachments/notice_instruction/NI_92215010.pdf>
- COLLINS JOEL T. ET AL: "Robotic microscopy for everyone: the OpenFlexure microscope", BIOMEDICAL OPTICS EXPRESS, vol. 11, no. 5, 8 April 2020 (2020-04-08), United States, pages 2447, XP055844705, ISSN: 2156-7085, Retrieved from the Internet <URL:https://www.osapublishing.org/DirectPDFAccess/7F8B6D94-ABBE-49D6-B0E19A48F94D13AD_429869/boe-11-5-2447.pdf?da=1&id=429869&seq=0&mobile=no> DOI: 10.1364/BOE.385729

**Description**

**DOMAINE TECHNIQUE**

L'invention se situe dans le domaine de l'instrumentation et des mesures nucléaires pour la caractérisation de déchets nucléaires.

**ÉTAT DE LA TECHNIQUE ANTÉRIEURE**

Habituellement, la caractérisation des déchets nucléaires est réalisée par le biais de différentes méthodes non destructives (sans destruction de l'échantillon) et passives (détection du rayonnement émis naturellement par l'échantillon). C'est notamment le cas de la spectrométrie gamma et de la technique de comptage neutronique passive.

La spectrométrie gamma permet d'obtenir des informations qualitatives et quantitatives sur les radionucléides émetteurs gamma. La spectrométrie gamma n'est cependant pas adaptée pour l'identification et la quantification des émetteurs alpha, du fait des interférences d'autres radionucléides (notamment des produits de fission) sur les pics d'intérêts de faible intensité, généralement aux basses énergies. Par ailleurs, la mesure de spectrométrie gamma, notamment des rayonnements de basses énergies, est sensible aux matrices de déchets de densité élevée.

La technique de comptage neutronique passive (que ce soit par comptage global ou par comptage des coïncidences) ne permet pas d'obtenir d'informations sur les radionucléides émetteurs de neutrons. À titre d'illustration, dans le cas d'un comptage des coïncidences, il est d'usage de déclarer une masse de $^{240}$Pu équivalent pour déclarer une masse de matière fissile. Ce type de mesure n'est toutefois pas adapté en présence de forts émetteurs de neutrons par fission spontanée tel que le $^{244}$Cm.

Il est possible d'évaluer l'activité des radionucléides qui sont difficilement mesurables, voire inaccessibles, par des mesures non-destructives, en connaissant l'activité d'un élément radiotraceur, ainsi qu'en connaissant le spectre type caractéristique des déchets produits. La connaissance du spectre type, qui représente l'inventaire quantitatif des différents radionucléides présents dans l'échantillon à caractériser, est donc une donnée essentielle qui se doit d'être fiable pour déterminer, avec suffisamment de précision, l'activité de l'ensemble des radionucléides en présence dans un colis de déchets nucléaires à partir de mesures nucléaires non destructives passives, et plus particulièrement pour déterminer l'activité des radionucléides émetteurs alpha dans un souci de maitrise des risques de sûreté-criticité.

La détermination du spectre type est habituellement établie en réalisant des mesures destructives sur un nombre de prélèvements suffisamment représentatifs des colis de déchets, notamment en réalisant des analyses radiochimiques sur ces échantillons.

La spectrométrie alpha en chambre à vide est une technique souvent mise en place pour déterminer l'inventaire quantitatif de radionucléides émetteurs alpha. Elle permet de discriminer certains groupes de transuraniens, comme le groupe $^{239}$Pu + $^{240}$Pu, le groupe $^{241}$Am + $^{238}$Pu et, enfin, $^{244}$Cm. Cette technique permet la discrimination isotopique des groupes de radionucléides par le biais d'une séparation chimique en amont lors de la préparation des échantillons. Cependant, cette préparation risque de dégrader la représentativité des prélèvements, par des dilutions notamment. Elle est également couteuse et chronophage, et est donc incompatible avec la cadence imposée par une production industrielle.

Le document [1] propose un dispositif de contrôle de la contamination atmosphérique due à des aérosols émetteurs de particules alpha. Son but est de pouvoir discriminer, par spectrométrie alpha fonctionnant en conditions ambiantes (c'est-à-dire à pression et température ambiantes (contrairement à la spectrométrie alpha en laboratoire, qui est réalisée sous vide)), les descendants du radon des actinides d'intérêts. Pour pallier le fait que la spectrométrie alpha en conditions ambiantes détériore de façon significative le spectre alpha obtenu et empêche toute discrimination, le dispositif décrit dans le document [1] utilise une grille de collimation afin de sélectionner les particules alpha les moins atténuées pour obtenir un spectre exploitable. Ce principe est exploité aujourd'hui dans certaines balises aérosol.

Sur le même principe, le document [2] décrit un dispositif mobile sur filtre pour discriminer les radionucléides $^{239}$Pu, $^{241}$Am et $^{244}$Cm. Ces radionucléides $^{239}$Pu, $^{241}$Am et $^{244}$Cm sont créés par multiples captures neutroniques sur du combustible usé. Ils peuvent donc se trouver en mélange avec d'autres radionucléides émetteurs alpha dans les déchets nucléaires provenant du retraitement du combustible nucléaire, notamment $^{238}$Pu. La problématique de l'isotope $^{238}$Pu est qu'il émet des particules alpha à des énergies sensiblement proches de celles émises par $^{241}$Am. Or, la résolution en énergie des détecteurs alpha employés n'est pas suffisamment fine pour quantifier individuellement $^{238}$Pu et $^{241}$Am, ce qui nécessite de corréler les mesures de spectrométrie alpha avec des mesures de spectrométrie gamma.

Dans le document [3] est décrit un système pour la caractérisation d'aérosol par spectrométrie alpha avec un détecteur PIPS (pour « Passivated Implanted Planar Silicon » en anglais) et par spectrométrie gamma avec un détecteur NaI. Bien que la mesure de spectrométrie gamma et la mesure de spectrométrie alpha soient réalisées simultanément sur l'échantillon, les données mesurées par spectrométrie alpha et par spectrométrie gamma ne semblent pas corréler, de manière à pouvoir quantifier les différents radionucléides émetteurs alpha et ainsi déterminer des ratios de radionucléides dans l'échantillon.

Dans le document [4] est décrit un système pour quantifier les émetteurs alpha dans des effluents contaminés en utilisant plusieurs détecteurs Si/diamant, qui sont répartis dans un système (appelé arbre), ce qui engendre plusieurs voies de mesures. Ce système permet d'améliorer la quantification des émetteurs alpha, mais il n'est envisageable que pour des effluents liquides.

Enfin le document [5] divulgue un système pour effectuer de manière simultanée des mesures de spectrométrie gamma et des mesures de spectrométrie alpha, ce système comportant : un détecteur gamma apte à fournir des mesures de spectrométrie gamma, un détecteur alpha apte à fournir des mesures de spectrométrie alpha, des moyens d'acquisition et d'analyse des mesures de spectrométrie alpha et de spectrométrie gamma, un dispositif d'alignement.

## EXPOSÉ DE L'INVENTION

Le but de l'invention est d'améliorer la caractérisation radiologique *in situ* d'objets ou de surfaces contaminées par des émetteurs alpha, de manière qualitative d'une part, en déterminant la nature des radionucléides présents, et de manière quantitative d'autre part, en estimant la part d'activité de ces derniers.

La connaissance de ces informations est primordiale dans le cadre de l'industrie nucléaire et notamment pour la gestion des déchets nucléaires afin de maitriser les risques liés à la sûreté-criticité, ainsi que l'impact radiologique sur l'homme et sur l'environnement.

Ce but est atteint, en outre, par un dispositif d'alignement pour aligner, selon un axe d'alignement, un détecteur alpha, un échantillon et un détecteur gamma, l'échantillon étant prévu pour être disposé entre les deux détecteurs, le dispositif comprenant :

- une base de montage ayant une face supérieure et une face inférieure, et dont au moins une portion, délimitée par les faces supérieure et inférieure et incluant l'axe d'alignement, est en un matériau apte à laisser passer les rayonnements gamma ;
- des premiers et deuxièmes moyens de support, chacun étant monté sur la face supérieure de la base de montage, dans lequel :

  - les premiers moyens de support comportent un corps avec au moins une ouverture, chaque ouverture étant traversante selon une direction parallèle, et éventuellement coaxiale, à l'axe d'alignement et étant munie d'une butée axiale configurée pour supporter l'échantillon dans l'axe d'alignement ;
  - les deuxièmes moyens de support, destinés à supporter le détecteur alpha, comportent un premier élément fixe par rapport à la base de montage et un deuxième élément, monté sur le premier élément, apte à se déplacer verticalement par rapport à ladite base de montage ;

- un élément butoir formant une butée latérale contre laquelle le détecteur gamma est destiné à venir se placer de manière à être dans l'axe d'alignement, ledit élément butoir étant monté sur la face inférieure de la base de montage.

De préférence, l'axe d'alignement est vertical.

Par matériau laissant passer les rayonnements gamma, on entend un matériau laissant passer au moins 75 % d'un flux de photons d'une énergie donnée. Il s'agira généralement d'un matériau avec un numéro atomique faible, une masse volumique faible et une épaisseur faible. À titre d'exemple, une paroi de poly méthacrylate de méthyle (PMMA) (ayant une masse volumique de 1,19 g.cm$^{-3}$ et un numéro atomique moyen de 6,56) de 5 mm d'épaisseur laisse passer 89 % d'un flux de photons de 59 keV en incidence normale sur cette paroi.

Certains aspects préférés mais non limitatifs de ce dispositif sont les suivants :

- l'élément butoir est un corps qui s'étend longitudinalement selon la direction de l'axe d'alignement et qui a, selon une section en coupe transversale, une forme en demi-lune dont le foyer est coaxial avec l'axe d'alignement ;
- le corps de l'élément butoir comporte au moins une encoche configurée pour recevoir une plaque formant écran et la maintenir parallèle à la face inférieure de la base de montage ;
- le premier élément des deuxièmes moyens de support est un châssis, et le deuxième élément des deuxièmes moyens de support comprend un arbre, qui est monté fixe sur le premier élément, et des moyens de maintien du détecteur alpha, par exemple une bague de serrage, qui sont montés mobile en translation verticale sur l'arbre;
- le corps des premiers moyens de support est un plateau qui est muni d'au moins deux ouvertures, et les premiers moyens de support comportent en outre un arbre s'étendant selon un axe parallèle à, et décalé par rapport à, l'axe d'alignement, le plateau étant monté rotatif sur l'arbre et chaque ouverture du plateau étant apte à être en vis-à-vis de l'axe d'alignement par rotation du plateau.

L'invention concerne également un système pour corréler des mesures de spectrométrie gamma et des mesures de spectrométrie alpha d'un même échantillon comprenant des radionucléides, tel que défini par la revendication 1. Ce système comprend :

- un détecteur gamma apte à fournir des mesures de spectrométrie gamma ;
- un détecteur alpha apte à fournir des mesures de spectromètre alpha, équipé d'une grille de collimation ;
- des moyens d'acquisition et d'analyse des mesures de spectrométrie alpha et de spectrométrie gamma ;

et est caractérisé en ce qu'il comprend en outre :

- le dispositif d'alignement selon l'invention, configuré pour aligner le détecteur gamma, le détecteur alpha et, entre les deux, l'échantillon à mesurer ;
- une enceinte de confinement de type boite à gants, destinée à contenir l'échantillon et le détecteur alpha, la base de montage du dispositif d'alignement formant tout ou partie de la paroi inférieure de l'enceinte de confinement.

De préférence, l'enceinte de confinement comporte plusieurs compartiments. Parmi ces compartiments, il peut y avoir un compartiment de conditionnement de l'échantillon et un compartiment de mesure.

Avantageusement, le système comprend en outre un collimateur destiné à être positionné autour du détecteur gamma, ledit collimateur étant un corps tubulaire, coaxial à l'axe d'alignement, formé par la réunion de deux demi-tubes. De préférence, le système comprend en outre une étagère, disposée sous l'enceinte de confinement, l'étagère comprenant une ouverture permettant le passage du détecteur gamma et ayant, sur sa face supérieure, des éléments de guidage linéaire, par exemple des rails de guidage, associés à chaque demi-tube, permettant de guider chaque demi-tube vers son demi-tube associé pour former le corps tubulaire du collimateur.

L'invention concerne enfin un procédé de détermination de l'activité A(X) d'un radionucléide X et de l'activité A(Y) d'un radionucléide Y émises par un échantillon comportant des radionucléides, dont les radionucléides X et Y, par mise en œuvre du système d'alignement tel que défini ci-dessus, le procédé comprenant :

- la mise en place de l'échantillon dans une ouverture du corps des premiers moyens de support ;
- la mise en place du détecteur alpha par rapport à l'échantillon et dans l'axe d'alignement par déplacement vertical du deuxième élément des deuxièmes moyens de support ;
- la mise en place du détecteur gamma dans l'axe d'alignement par calage du détecteur gamma contre la butée latérale de l'élément butoir ;
- l'acquisition, de préférence simultanément et pendant un même temps de comptage, d'un spectre alpha et d'un spectre gamma ;
- dans l'un des deux spectres, sélection d'une raie d'énergie dans laquelle le radionucléide X est identifiable et n'est pas en interférences avec le ou les autres radionucléides de l'échantillon, et détermination de l'activité A(X) du radionucléide X ;
- dans l'autre des deux spectres, sélection d'une raie d'énergie dans laquelle seuls les radionucléides X et Y sont en interférences, calcul de la contribution, en nombre de coups N(X), du radionucléide X dans ladite raie, et détermination de la contribution, en nombre de coups N(Y), du radionucléide Y dans ladite raie ;
- détermination de l'activité A(Y).

Étant donné que les deux appareils de mesure (alpha et gamma) ont leurs propres sensibilité et limite de détection, les temps de mesure des deux appareils de mesure peuvent donc être différents pour obtenir un résultat exploitable. Les mesures alpha et gamma peuvent donc être réalisées successivement et pas nécessairement simultanément. L'essentiel est que la géométrie de mesure soit figée pour pouvoir corréler les mesures. L'avantage de réaliser simultanément les mesures est principalement lié à l'optimisation des temps de mesure pour s'adapter à la cadence imposée par le procédé.

Selon un premier mode de réalisation, l'échantillon étant un contaminant présent sur une face de prélèvement d'un support de prélèvement qui est en un matériau transparent aux rayonnements gamma, le procédé comprend en outre un conditionnement de l'échantillon, de préférence dans un compartiment de l'enceinte de confinement, le conditionnement comprend un assemblage, par collage, de la face de prélèvement du support de prélèvement comportant le contaminant, avec une face d'un film de protection, le film de protection étant en un matériau transparent aux rayonnements alpha, au moins dans une fenêtre destinée à venir en vis-à-vis du contaminant.

De préférence, le support de prélèvement est en poly téréphtalate d'éthylène (PET) et comporte, sur sa face de prélèvement, une couche d'adhésif.

Selon un autre mode de réalisation, l'échantillon étant un contaminant présent sur une face de prélèvement d'un support de prélèvement qui est en un matériau transparent aux rayonnements gamma, le procédé comprend en outre le conditionnement de l'échantillon, de préférence dans un compartiment de l'enceinte de confinement, le conditionnement comprenant :

- un dépôt de l'échantillon sur une face d'un support plan en un matériau transparent aux rayonnements gamma ;
- un assemblage, par collage, de la face du support plan sur laquelle est déposé l'échantillon, avec une face d'un film de protection, le film de protection étant en un matériau transparent aux rayonnements alpha, au moins dans une fenêtre destinée à venir en vis-à-vis du contaminant.

De préférence, la face du support plan comporte une couche d'adhésif, qui est présente avant le dépôt de l'échantillon.

De préférence, le support plan est en poly téréphtalate d'éthylène (PET).

Avantageusement, que ce soit dans le premier ou le deuxième mode de réalisation, au moins la fenêtre du film de protection, de préférence le film de protection dans sa totalité, est en poly téréphtalate d'éthylène (PET). De préférence, la fenêtre du film de protection en PET a une épaisseur de 6 $\mu$m ou moins.

Le principal intérêt de l'invention est de réaliser des mesures *in situ,* sans nécessiter une préparation longue et couteuse des échantillons, comme cela est habituellement réalisé en laboratoire.

Afin de répondre aux problématiques de l'art antérieur, l'invention propose un système qui est mobile et portatif, ce qui permet de réaliser les mesures au plus près des chantiers de démantèlement.

Le système selon l'invention comporte un détecteur gamma (de préférence un détecteur germanium, qui permet une meilleure performance en termes de résolution en énergie), ainsi qu'un détecteur alpha (de préférence un détecteur silicium, fonctionnant en conditions ambiantes). La discrimination des émetteurs alpha en conditions ambiantes est possible par l'ajout d'une grille de collimation positionnée en regard de la surface active du détecteur silicium. Celle-ci permet alors de ne détecter que les particules alpha les moins atténuées, ce qui améliore la résolution en énergie et rend possible l'identification des émetteurs alpha.

Grâce au dispositif d'alignement selon l'invention, les détecteurs alpha et gamma sont positionnés sur le même axe que celui de l'échantillon. En outre, grâce au dispositif d'alignement, la géométrie de mesure est figée, ce qui permet de corréler les mesures de spectrométrie alpha et de spectrométrie gamma. Cette corrélation est nécessaire pour estimer des ratios entre les différents radionucléides (spectre type).

## BRÈVE DESCRIPTION DES DESSINS

La présente invention sera mieux comprise à la lecture de la description qui va suivre, donnée à titre purement indicatif et nullement limitatif, en faisant référence aux dessins annexés sur lesquels :

- la figure 1 représente un schéma simplifié d'un mode de réalisation du système de corrélation selon l'invention, selon une vue de côté en perspective ;
- la figure 2 représente un schéma simplifié d'un autre mode de réalisation du système de corrélation selon l'invention, selon une vue de face, en coupe ;
- la figure 3 représente un spectre alpha expérimental réalisé en laboratoire avec un détecteur alpha équipé d'une grille de collimation et des sources électrodéposées ;
- la figure 4 représente, selon une vue de dessus, une étagère, destinée à être placée sous la boite à gants et à supporter un collimateur pour le détecteur gamma ;
- la figure 5 représente, selon une vue en coupe, un mode de réalisation du dispositif d'alignement selon l'invention ;
- la figure 6a représente une vue en coupe de face du détecteur gamma positionné contre l'élément butoir ;
- la figure 6b représente une vue en coupe transversale du détecteur gamma positionné contre l'élément butoir ;
- la figure 6c représente une vue de côté du détecteur gamma positionné contre l'élément butoir ;
- la figure 7a représente une vue de face d'un exemple de réalisation d'un dispositif d'alignement selon l'invention ;
- la figure 7b représente une vue de côté d'un exemple de réalisation d'un dispositif d'alignement selon l'invention ;
- la figure 8a représente une vue en coupe de face d'un mode de réalisation montrant un écran positionné dans l'élément butoir entre le détecteur gamma et la face inférieure de la base de montage (non représentée) ;
- la figure 8b représente une vue en coupe transversale du mode de réalisation montrant un écran positionné dans l'élément butoir entre le détecteur gamma et la face inférieure de la base de montage (non représentée) ;
- la figure 8c représente une vue de côté du mode de réalisation montrant un écran positionné dans l'élément butoir entre le détecteur gamma et la face inférieure de la base de montage (non représentée) ;
- la figure 9 représente, selon une vue de face (et partiellement en coupe) un autre exemple de réalisation d'un dispositif d'alignement selon l'invention ;
- la figure 10 représente un exemple de conditionnement de l'échantillon ;
- la figure 11 est un exemple de spectre alpha obtenu par simulation en modélisant des sources électrodéposées ;

- la figure 12 est un exemple de spectre gamma simulé ;
- la figure 13 est une représentation schématique du principe de fonctionnement du procédé selon l'invention.

## EXPOSÉ DÉTAILLÉ DE MODES DE RÉALISATION PARTICULIERS

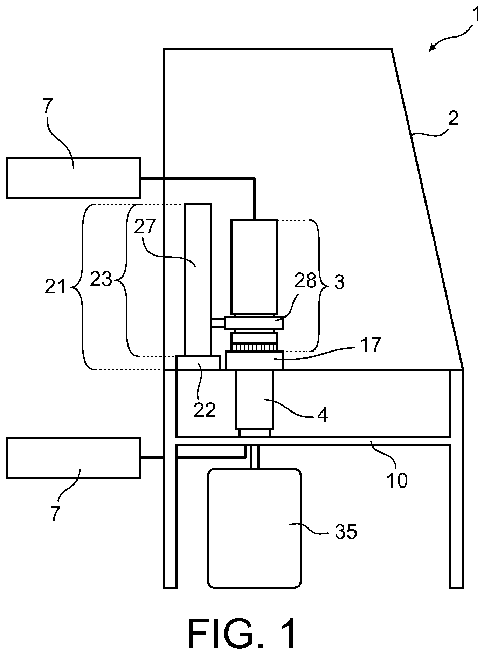

Dans la figure 1 est représentée une vue de côté en perspective d'un exemple de réalisation du système de corrélation 1 selon l'invention.

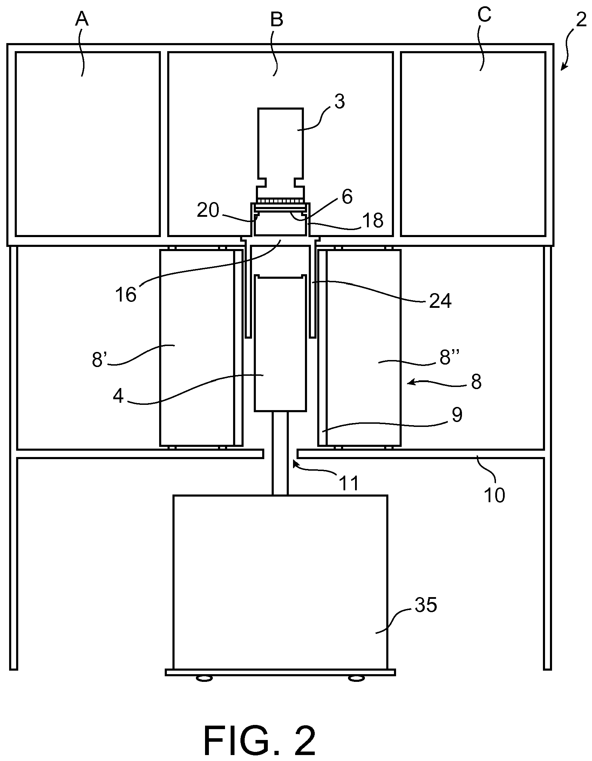

Dans la figure 2 est représenté, selon une vue en coupe et de face, un exemple de réalisation du système de corrélation 1 selon l'invention. Le système de corrélation 1 comprend notamment une boite à gants 2, un détecteur alpha 3, un détecteur gamma 4 et un dispositif d'alignement 5, qui permet d'aligner un échantillon 6 avec les détecteurs alpha et gamma. On précise que dans la figure 2, les deuxièmes moyens de support 21 du dispositif d'alignement 5 n'ont pas été représentés pour faciliter la lecture de la figure.

La boite à gants 2 est mobile (transportable) pour pouvoir être positionnée au plus près des chantiers de démantèlement. Elle permet de garantir la non-dispersion de la contamination lors des analyses des échantillons. Elle est destinée à contenir l'échantillon 6 à analyser, ainsi que le détecteur alpha 3.

De préférence, la boite à gants 2 est compartimentée. Selon un mode de réalisation préféré, la boîte à gants comporte trois compartiments juxtaposés (figure 2). Le premier compartiment A sert à réceptionner l'échantillon 6 à analyser et à le conditionner (mise sous film, par exemple). Le deuxième compartiment B sert à la mesure de l'échantillon par spectrométrie alpha. Le troisième compartiment C sert à la maintenance du matériel (notamment, la décontamination des éléments de la chaine de spectrométrie alpha).

Le compartiment B peut être également instrumenté avec d'autres appareils de mesures tels que, par exemple :

- un détecteur de spectrométrie bêta, pour mesurer les radionucléides émetteurs bêta purs, non mesurables par le biais de la spectrométrie alpha et de la spectrométrie gamma ;
- une sonde de comptage alpha global ;
- une sonde de comptage bêta global.

Des compartiments supplémentaires peuvent être ajoutés, si nécessaire. Par exemple, on peut ajouter un sas entre les compartiments A et B. En effet, le compartiment A étant le compartiment qui risque le plus d'être contaminé à cause du conditionnement des échantillons, en ajoutant un compartiment supplémentaire entre les compartiments A et B (jouant le rôle de sas de transition), on évite une trop grande contamination dans le compartiment B lors du transfert de l'échantillon conditionné dans le compartiment A.

Le détecteur alpha et le détecteur gamma sont chacun reliés à des moyens d'acquisition et d'analyse de données 7, par exemple un analyseur multi-canaux et un ordinateur (figure 1) ; on précise que l'ordinateur peut être commun aux deux détecteurs.

De manière connue, le détecteur alpha 3 peut être associé, par l'intermédiaire d'un connecteur, à un pré-amplificateur, qui va permettre de collecter les charges crées dans le détecteur pour constituer un signal dont l'intégrale est proportionnelle à l'énergie déposée, le tout étant inclus dans un boitier de protection opaque à la lumière visible et aux rayonnements alpha ayant une cavité ouverte, fermée par une grille de collimation qui est placée à proximité et en regard de la fenêtre d'entrée (également appelée fenêtre active) du détecteur alpha. La grille de collimation est par exemple réalisée en acier inoxydable. Elle peut être remplacée en cas de contamination. Le boitier de protection peut, quant à lui, être réalisé en acier inoxydable.

Le détecteur alpha 3 est adapté à la mesure du rayonnement alpha en conditions ambiantes. De préférence, il s'agit d'un détecteur silicium, par exemple un détecteur PIPS (pour « Passivated Implanted Planar Silicon » en anglais) ou un détecteur TCAM de chez MIRION technologies (qui est une version renforcée d'un détecteur CAM standard). Pour permettre l'éventuelle décontamination du détecteur alpha 3, la fenêtre d'entrée du détecteur alpha est protégée par une couche de vernis.

Le détecteur alpha 3, qui fonctionne en conditions ambiantes, dispose de performances qui sont sensiblement équivalentes, en termes de discrimination des radionucléides émetteurs alpha, à celles que présente le même type de détecteur alpha fonctionnant en chambre à vide pour le cas de sources électrodéposées. Il est notamment capable de séparer l'uranium du plutonium, ainsi que les descendants du radon, tel que le polonium, des actinides d'intérêts (Pu, Am, Cm), ainsi que de séparer par exemple les groupes de radionucléides suivants : le groupe $^{239}$Pu + $^{240}$Pu, le groupe $^{238}$Pu + $^{241}$Am et enfin $^{244}$Cm.

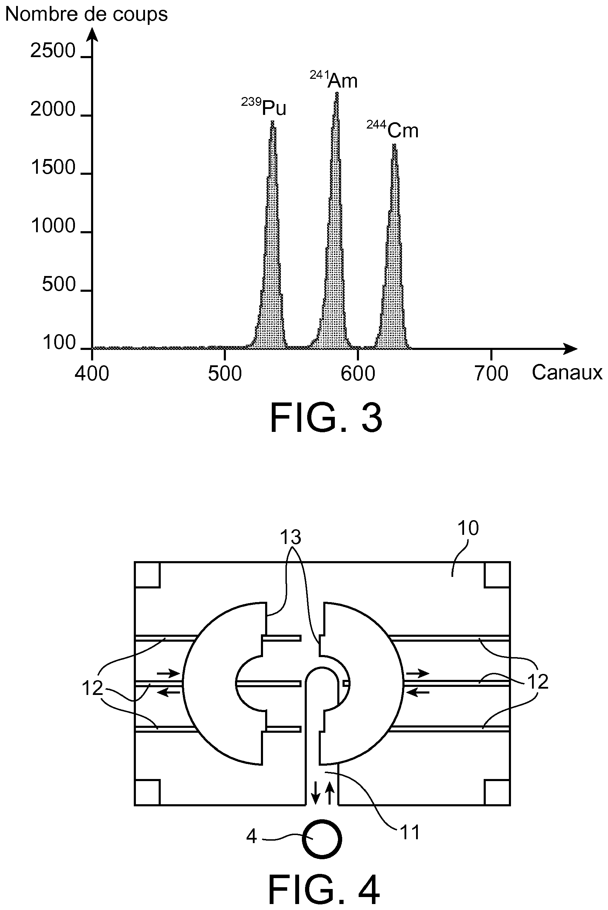

La grille de collimation du détecteur alpha peut être dimensionnée par simulation, de manière à obtenir des performances similaires à celles obtenues dans le cas d'un détecteur alpha en chambre à vide, sans séparation isotopique en amont. Les performances de la grille de collimation ainsi dimensionnée ont été testées en laboratoire sur des sources électrodéposées. Les performances en termes de résolution en énergie sont de 70 à 80 keV pour les pics alpha de $^{239}$Pu, $^{241}$Am et $^{244}$Cm, pour une distance source/détecteur alpha de 8 mm (figure 3). On rappelle que, quand on parle de résolution en énergie, on parle de largeur à mi-hauteur des pics alpha. On constate qu'avec une résolution de 70 à 80 keV, il est possible de discriminer les pics.

Comme illustré dans les figures 1 et 2, le détecteur gamma 4 est situé hors de la boîte à gant 2.

Le détecteur gamma choisi est de préférence un détecteur germanium haute pureté. De manière connue, les détecteurs germanium utilisés en spectrométrie gamma sont de haute pureté. Les détecteurs germanium haute pureté sont actuellement les plus performants en termes de résolution en énergie, ce qui permet de pouvoir identifier les pics d'intérêts sur le spectre gamma.

Le détecteur gamma est de préférence un détecteur planaire. Les détecteurs planaires sont spécialement dédiés à la mesure des rayonnements gamma de faible à moyenne énergie selon leur épaisseur, ce qui est bénéfique dans notre cas puisque les raies d'énergies des radionucléides d'intérêts sont principalement émises à basse énergie. Une plus faible efficacité aux moyennes et hautes énergies est intéressante pour limiter l'impact des radionucléides parasites tels que les produits de fission (par exemple, $^{137}$Cs) et les produits d'activation (par exemple, $^{60}$Co), qui pourraient noyer les pics d'intérêts dans leur fond Compton.

Du fait de la nature des radionucléides présents dans la contamination, des effets de coïncidences peuvent avoir lieu lors de la mesure gamma. La coïncidence se traduit par la détection simultanée de deux ou plusieurs photons gamma émis en cascade, ce qui engendre des pics sommes (qui, comme leur nom l'indique, résultent de la somme de plusieurs pics), dont la conséquence est une sur-estimation ou une sous-estimation du comptage dans les pics d'énergie totale.

Pour s'affranchir au mieux de ce phénomène, on placera le détecteur gamma 4 au minimum à une distance de 10 cm de l'échantillon 6.

Les performances en termes d'identification et de quantification de $^{241}$Am avec un détecteur gamma planaire ont été évaluées en laboratoire par simulation numérique. Ainsi, à l'aide d'un détecteur planaire LEGe™ de chez MIRION Technologie, des tests en laboratoire ont été réalisés afin de valider la possibilité de quantifier $^{241}$Am dans un fond continu Compton de $^{137}$Cs.

Un ratio Am/Cs pénalisant de 0,01 a été choisi pour étudier les cas extrêmes et pénalisants. Ce ratio est représenté expérimentalement en plaçant une source ponctuelle de $^{241}$Am, d'une activité de 43604 Bq, à 155 cm du détecteur LEGe™ et une source ponctuelle de $^{137}$Cs, d'une activité de 296043 Bq, à 40 cm du détecteur.

Dans cette configuration, il a été montré qu'il était possible d'identifier le pic photoélectrique à 59 keV du $^{241}$Am et que l'incertitude sur le nombre de coups dans ce pic atteignait 10 % pour une acquisition de 30 minutes.

Afin de limiter le bruit de fond ambiant lors de l'acquisition des spectres gamma (c'est-à-dire l'ensemble des rayonnements parasites émis par les radionucléides présents naturellement dans les matériaux environnants, le rayonnement cosmique, ainsi que les sources radioactives situés hors champ du collimateur), un blindage en plomb est placé autour du détecteur gamma et de l'élément butoir du dispositif d'alignement. Ce blindage fait également office de collimateur 8 via la réduction de l'angle solide du détecteur gamma 4 à la dimension de l'échantillon 6. En outre, le collimateur 8 peut être chemisé sur sa paroi intérieure par un fourreau 9 en cuivre, afin d'atténuer les raies X du plomb qui viennent détériorer le spectre gamma aux basses énergies. Ce blindage permet également d'éviter de saturer l'électronique du détecteur gamma avec du rayonnement parasite.

Il y a différentes possibilités de mise en place du collimateur 8 autour du détecteur gamma et de l'élément butoir, l'important étant que la mise en place du collimateur s'adapte à la configuration de la boîte à gants (espace disponible sous la boite à gants) et aux dimensions du détecteur gamma. Par exemple, comme illustré dans la figure 2, le collimateur 8 peut se positionner sur une étagère 10, située en dessous de la boite à gants. L'étagère possède en outre une ouverture 11 (par exemple une tranchée) dimensionnée pour laisser passer le détecteur gamma. Ici, la tranchée est dimensionnée pour laisser passer la tige du moyen élévateur sur lequel est positionné le détecteur gamma. Ce moyen élévateur va permettre de régler la distance entre le détecteur gamma et la face inférieure de la base de montage 15 (surface extérieure de la paroi inférieure de la boite à gants).

Selon une configuration possible illustré dans la figure 4, le collimateur est en deux parties 8' et 8" (demi-tubes) qui coulissent le long de rails 12 présents sur l'étagère pour, une fois réunies, former le collimateur. Des épaulements 13, présents au niveau des parois latérales des deux parties 8' et 8" du collimateur, permettent d'assurer une fermeture complète du collimateur, et ainsi l'atténuation du rayonnement environnant et donc la protection radiologique du détecteur gamma lorsque le collimateur est fermé. De préférence, les rails 12 sont dimensionnés de sorte que le collimateur soit considéré comme fermé lorsque les deux parties 8' et 8" du collimateur arrivent en butée de leurs rails respectifs. Selon une variante, des poignées peuvent être ajoutées sur la face extérieure de chaque partie 8' et 8" du collimateur pour faciliter leur déplacement sur les rails 12.

Il est possible d'utiliser un refroidisseur 35, qui permet d'assurer le refroidissement du détecteur gamma en fonctionnement. Si le détecteur gamma est un détecteur germanium haute pureté, on pourra utiliser, pour le refroidissement du détecteur germanium, soit un Dewar et un refroidissement à l'azote liquide, soit un refroidisseur électrique.

Le dispositif d'alignement 5 est l'élément clef du couplage des informations obtenues par les deux détecteurs alpha et gamma. En effet, comme nous l'avons déjà indiqué, il permet d'aligner, selon un axe d'alignement 14, l'ensemble détecteur alpha/échantillon/détecteur gamma et ainsi maitriser la géométrie de mesure, afin de garantir la reproductibilité des mesures.

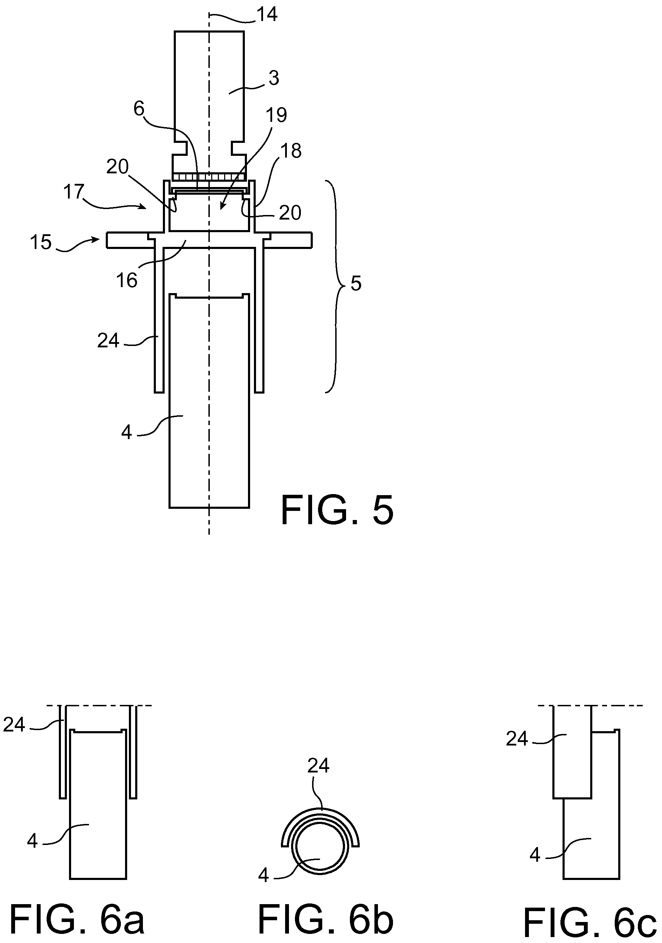

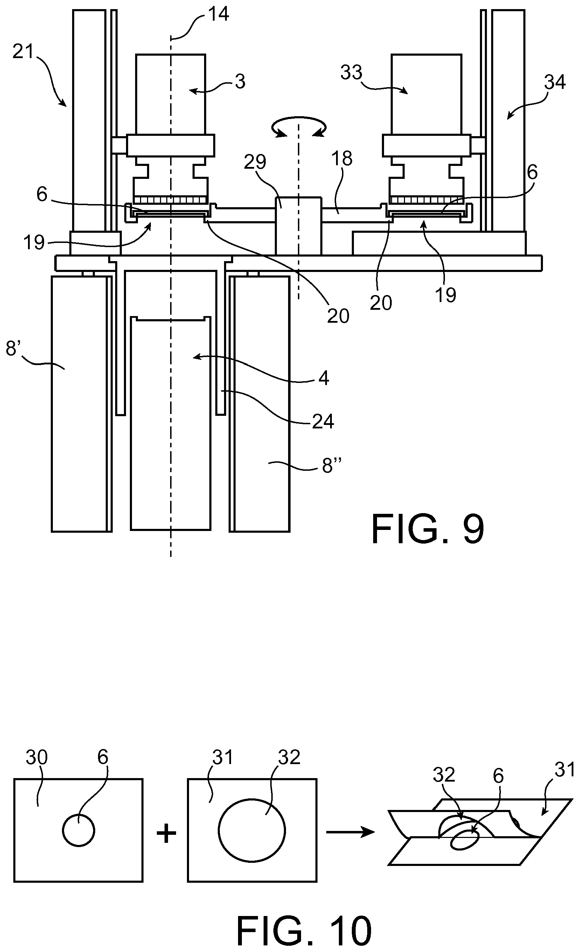

Le dispositif d'alignement 5 comporte une base de montage 15, qui a une face supérieure et une face inférieure (figures 5 et 9). Au moins une portion 16 de la base de montage 15, qui est délimitée par les faces supérieure et inférieure et qui inclue l'axe d'alignement 14, est en un matériau apte à laisser passer les rayonnements gamma. L'intégralité de la base de montage peut être en un matériau apte à laisser passer les rayonnements gamma. De préférence, la base de montage correspond à la paroi inférieure de la boîte à gants. Si la portion 16 ne correspond pas à l'intégralité de la paroi inférieure de la boîte à gants, on prendra soin de garantir l'étanchéité entre la base de montage et la paroi inférieure de la boite à gants afin de garantir le confinement de la boîte à gants.

La base de montage a au moins une portion en un matériau laissant passer les rayonnements gamma afin que les rayonnements gamma émis par l'échantillon, situé dans la boite à gants, puissent atteindre le détecteur gamma 4, qui est situé à l'extérieur de la boîte à gants, sans qu'il y ait une atténuation trop importante du flux gamma. Le matériau laissant passer les rayonnements gamma est un matériau avec un numéro atomique faible, une masse volumique faible et une épaisseur faible. Par exemple, une paroi d'épaisseur de 5 mm de poly méthacrylate de méthyle (PMMA) (masse volumique de 1,19 g.cm$^{-3}$ et un numéro atomique moyen de 6,56) laisse passer 89 % d'un flux de photons de 59 keV en incidence normale sur cette paroi.

Il est à noter également que, étant donné la présence de matière fissile dans les échantillons, les parties du dispositif d'alignement situées à l'intérieur de la boîte à gants (base de montage et premiers et deuxièmes moyens de support) ne peuvent pas être réalisées dans une matière de type PVC (poly(chlorure de vinyle)) et ce afin de s'affranchir de toutes réactions (alpha, n) sur les noyaux légers tels que le Chlore générant des neutrons.

Le dispositif d'alignement 5 comporte également des premiers 17 et deuxièmes 21 moyens de support, qui sont chacun monté sur la face supérieure de la base de montage 15.

Les premiers moyens de support 17 servent à supporter l'échantillon. Ils comportent un corps 18 avec au moins une ouverture 19, chaque ouverture étant traversante selon une direction parallèle, et éventuellement coaxiale, à l'axe d'alignement. Chaque ouverture est également munie d'une butée axiale 20, cette butée axiale étant configurée pour supporter l'échantillon 6 dans l'axe d'alignement 14.

Comme illustré dans la figure 5, le corps 18 peut comporter une seule ouverture traversante, qui est coaxiale avec l'axe d'alignement 14. Comme l'ouverture est traversante, il n'y a que la base de montage entre l'échantillon et le détecteur gamma dans l'axe d'alignement.

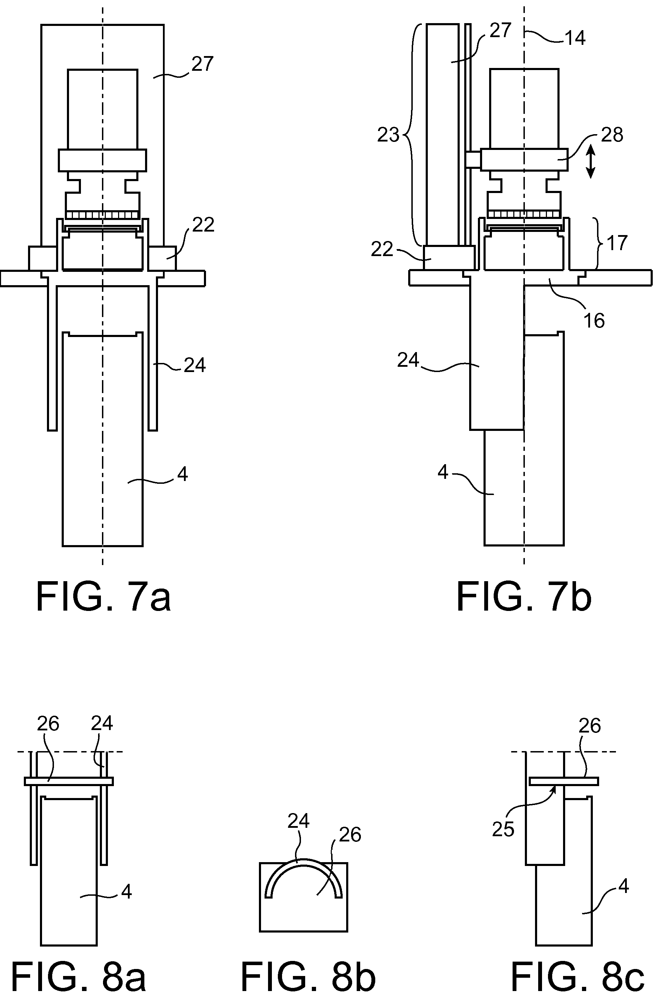

Les deuxièmes moyens de support 21 servent à supporter le détecteur alpha 3 et à son centrage dans l'axe d'alignement. Comme illustré dans la figure 7, les deuxièmes moyens de support 21 comportent un premier élément 22, qui est fixe par rapport à la base de montage 15 (il sera généralement fixé sur la base de montage), et un deuxième élément 23, qui est monté sur le premier élément 22, qui est apte à se déplacer verticalement par rapport à ladite base de montage 15 et qui maintient le détecteur alpha. Comme illustré dans la figure 7, ce premier élément 22 peut être un châssis; le deuxième élément 23 peut comprendre un arbre 27, qui est monté fixe sur le premier élément 22, et des moyens de maintien 28 du détecteur alpha, par exemple une bague de serrage, qui sont montés mobile en translation verticale sur l'arbre 27. Le premier élément 22 est fixé de manière à ce que le détecteur alpha soit dans l'axe d'alignement (donc aligné avec l'échantillon). Le détecteur alpha 3 est maintenu par la bague de serrage et va pouvoir être positionné en contact ou pseudo contact avec l'échantillon en étant déplacé verticalement par une translation verticale de la bague de serrage sur l'arbre 27.

Le dispositif d'alignement 5 comporte également un élément butoir 24 qui forme une butée latérale contre laquelle le détecteur gamma 4 est destiné à venir se placer afin d'être dans l'axe d'alignement. Cet élément butoir est monté sur la face inférieure de la base de montage 15. Le détecteur gamma est placé en butée contre l'élément butoir 24 afin d'être aligné avec l'échantillon 6 et le détecteur alpha 3. Les figures 6a-6c montrent différentes vues du placement du détecteur gamma contre l'élément butoir.

Une fois le détecteur gamma placé, on met en place le collimateur 8 autour du détecteur gamma et de l'élément butoir.

Il est possible d'insérer entre le détecteur gamma et l'échantillon, hors de la boîte à gants, un ou plusieurs écrans 26 de matière et d'épaisseur variables afin de moduler la fluence des photons gamma de basse énergie. Une ou plusieurs encoches 25, pratiquées dans l'élément butoir 24, permettent de positionner ces écrans. Les figures 8a-8c représentent un exemple de positionnement d'un écran sur l'élément butoir selon différentes vues. Il peut par exemple s'agir d'un écran en cadmium ou en zinc.

L'utilisation d'un écran 26 est notamment nécessaire dans le cas où $^{241}$Am est présent en grande quantité dans l'échantillon à analyser. En effet, la raie caractéristique de ce radionucléide à 59 keV est très intense. L'utilisation d'un écran avec un matériau de numéro atomique faible (comme le cadmium ou le zinc) et d'une épaisseur pouvant varier de 1 à plusieurs millimètres d'épaisseur permet d'atténuer cette raie à 59 keV, afin d'éviter de saturer l'électronique du détecteur gamma, tout en évitant d'atténuer les raies à plus hautes énergies. Par exemple, une épaisseur de 2 mm de zinc (numéro atomique 30 et masse volumique de 7,13 g.cm$^{-3}$) permet d'atténuer plus de 90 % d'un flux de photons de 59 keV en incidence normale sur cet écran.

Les écrans permettent notamment de s'adapter à tous types de ratios Am/Cs, notamment dans le cas où l'américium est très majoritaire devant le césium pour pouvoir quantifier $^{137}$Cs.

Si le compartiment de mesure B de la boîte à gants contient différents appareils de mesures, il est intéressant d'adapter le corps 18 des premiers moyens de support 17 afin de pouvoir réaliser les mesures sur l'échantillon 6 sans devoir le transférer manuellement d'un appareil de mesure à l'autre. Pour ce faire, comme illustré dans la figure 9, les premiers moyens de support 17 sont réalisés indépendamment de la base de montage 15. Le corps 18 est par exemple un plateau qui est muni d'au moins deux ouvertures 19, et les premiers moyens de support 17 comportent en outre un arbre 29 qui s'étend selon un axe qui est parallèle à, et décalé par rapport à, l'axe d'alignement 14 ; le plateau est monté rotatif sur l'arbre et chaque ouverture du plateau est apte à être en vis-à-vis de l'axe d'alignement par rotation du plateau. Dans la figure 9, comme pour le détecteur alpha 3, l'autre appareil de mesure 33 est maintenu au-dessus d'un échantillon grâce à des moyens de support 34 équivalents aux deuxièmes moyens de support 21.

Ainsi, par rotation du plateau, on peut faire passer l'échantillon d'une sonde de mesure à l'autre. Le plateau peut également comporter plus de deux ouvertures, par exemple quatre ouvertures servant chacune à supporter un échantillon ; le plateau peut par exemple avoir une forme de trèfle à quatre feuilles, chaque feuille du trèfle comportant une ouverture, ce qui permet d'analyser les quatre échantillons simultanément en plaçant au-dessus de chaque échantillon une des quatre sondes de mesure.

L'échantillon à analyser 6 se définit comme étant un contaminant qui est prélevé sur un objet contaminé à l'aide d'un support adapté. L'échantillon 6 comprend donc le contaminant et, *a minima,* un support de prélèvement, qui sera généralement une plaque ayant deux faces principales planes, le contaminant étant situé sur au moins l'une des deux faces principales du support.

Pour réaliser une mesure fiable à l'aide du détecteur alpha, rappelons tout d'abord qu'il est primordial d'éviter tout risque de contamination au niveau de la grille de collimation et de la surface active du détecteur alpha, afin d'éviter de parasiter les résultats de mesures. En effet, le détecteur alpha peut être décontaminé, mais ce n'est pas le cas de la grille de collimation.

Plusieurs propositions ont été envisagées pour pallier cet inconvénient.

Selon une première proposition, les mesures alpha peuvent être réalisées directement sur le support source (objet contaminé). Entre chaque mesure, le détecteur alpha est décontaminé et la grille de collimation est changée. C'est l'une des méthodes les plus simples, mais c'est également la plus coûteuse.

Selon une deuxième proposition, comme pour la première proposition, on réalise les mesures directement sur le support source et, entre chaque mesure, on réalise un bruit de fond qui est retranché sur le spectre suivant. Cette méthode est simple, mais réduit fortement la cadence de caractérisation des échantillons et implique plus d'incertitudes sur le résultat de mesure.

L'inconvénient de ces deux propositions est le vieillissement prématuré du détecteur alpha par la contamination, ce qui détériore les performances du détecteur à termes (impacts sur la zone active du détecteur). Le détecteur alpha doit donc être remplacé de façon récurrente.

On peut également procéder à un prélèvement du contaminant sur un support adapté.

Plusieurs méthodes de prélèvement peuvent être envisagées. On peut procéder à un prélèvement par frottement (frottis), réalisé par un opérateur (manuellement) ou à distance (télé-opération, robot). On peut procéder à un prélèvement par aspiration (sur filtre). On peut également procéder à un prélèvement par collage par l'utilisation de matériaux adhésifs.

Dans le cas d'un prélèvement par frottement ou par aspiration, le choix du support de l'échantillon est primordial. En effet, les paramètres physico-chimiques du support doit être adapté afin que la contamination ne pénètre pas en profondeur au sein du support, cela afin d'éviter une trop importante auto-absorption des particules alpha et ainsi une dégradation du spectre alpha. Mais là encore, on ne règle pas le problème de la contamination du détecteur alpha.

Dans le cas d'un prélèvement par collage, le choix du matériau adhésif (nature physico chimique et épaisseur) est un critère important, puisque la contamination va venir se fixer dans la « colle ». Cette colle génèrera inévitablement un phénomène d'auto-absorption, mais l'avantage est que la grande majorité de la contamination restera fixée sur le support, contrairement aux méthodes par frottement ou par aspiration où la contamination qui reste en surface risque d'être trop labile. En utilisant le prélèvement par collage en utilisant un matériau adhésif, on fixe la contamination sur le support, ce qui permet de réduire la contamination labile au niveau de l'échantillon.

Pour réduire la contamination du détecteur alpha dans le cas d'un prélèvement par frottement ou par aspiration, ou pour réduire encore plus la contamination dans le cas d'un prélèvement par collage, on propose en plus d'utiliser un film pour contenir la contamination.

En laboratoire, plusieurs types de films ont été testés pour observer l'atténuation des particules alpha au sein de ce film. Il a été montré qu'un film de PET (Poly téréphtalate d'éthylène) d'une épaisseur de 6 μm permet de protéger le spectromètre alpha, tout en obtenant un spectre alpha acceptable pour l'analyse (passage d'une résolution en énergie de 70 keV sans film à une résolution de 110 keV avec film, dans le cas de sources électro-déposées). Il est à noter que ce genre de matériau PET est usuellement dopé en aluminium (PET aluminisé) et utilisé dans les détecteurs de comptage alpha, afin de protéger le détecteur de la lumière ambiante.

Avantageusement, le conditionnement de l'échantillon pourra être réalisé dans un compartiment (A) de la boite à gants.

On rappelle que l'échantillon est un contaminant présent sur au moins l'une des faces d'un support de prélèvement. Selon la méthode de prélèvement, le support de prélèvement sera différent, mais il est toujours en un matériau transparent aux rayonnements gamma ; par exemple, il peut s'agir d'un filtre (prélèvement par aspiration), d'une plaque avec une face collante (prélèvement manuel ou à distance), etc.

Selon une première configuration, l'échantillon est conditionné en sandwich entre deux supports plans dont au moins l'un est partiellement en PET (c'est-à-dire qu'il possède une fenêtre d'épaisseur très fine en PET (pour que les particules alpha parviennent à atteindre le détecteur alpha)) ou est complètement en PET. Par exemple, l'épaisseur très fine est de 6 $\mu$m ou moins. Ces deux supports plans peuvent être de type film ou feuille.

Par exemple, dans la configuration illustrée dans la figure 10, l'échantillon est pris en sandwich entre deux supports plans, dont l'un est un film de protection. Le support plan qui forme l'élément inférieur de l'empilement est un support rigide et il est en un matériau transparent aux rayonnements gamma (car il est destiné à être placé en regard du détecteur gamma). Sur la face supérieure du support plan est présent l'échantillon et cette face supérieure et l'échantillon sont recouverts par le film de protection, qui est destiné à être placé en regard du détecteur alpha. Dans notre exemple, le film de protection possède une fenêtre en PET d'épaisseur 6 $\mu$m et le reste du film de protection est en un matériau souple, mais qui est de préférence plus rigide que la fenêtre en PET d'épaisseur 6 $\mu$m. Au moins l'un du support plan et du film de protection a une face adhésive, qui va permettre de solidariser ces deux éléments et sceller l'échantillon.

Dans la configuration illustrée dans la figure 10, c'est le film de protection qui a une face adhésive, en dehors de la fenêtre en PET, pour sceller l'échantillon. Il n'y a pas de colle au niveau de la fenêtre de PET de 6 $\mu$m d'épaisseur pour éviter une atténuation supplémentaire.

Il est préférable que le support plan soit rigide. Cela permet de maintenir l'échantillon le plus plat possible et ainsi maitriser la géométrie de mesure pour n'importe quel échantillon. Un support plan rigide rend également plus facile le conditionnement au sein de la boîte à gants par l'opérateur, ainsi que son placement sur la butée axiale 20 de l'ouverture 19 du corps 18 des premiers moyens de support 17.

Selon une autre configuration, l'échantillon (contaminant et support de prélèvement) est conditionné en sandwich entre deux films de PET de 6 $\mu$m d'épaisseur, scellées par thermocollage. Si le contaminant a été prélevé sur les deux faces du support de prélèvement, l'échantillon, une fois conditionné en sandwich entre ces deux films de PET, peut être analysé par le détecteur alpha sur ces deux faces (la face présentée en regard du détecteur alpha n'a ici pas d'importance). L'inconvénient de cette configuration est que l'ensemble n'est plus rigide. En outre, le film de PET de 6 $\mu$m d'épaisseur utilisé seul est difficilement manipulable. Un équipement supplémentaire est donc nécessaire pour thermo-souder les deux films de PET autour du contaminant pour conditionner l'échantillon.

Selon une autre configuration, le contaminant ayant été prélevé sur la face collante d'un support de prélèvement rigide, le conditionnement de l'échantillon consiste à appliquer un film de protection (par exemple, une feuille de PET de 6 $\mu$m d'épaisseur) sur la face collante du support de prélèvement. L'application de la feuille de PET sur la face collante du support de prélèvement permet d'emprisonner la contamination.

Quelle que soit la méthode choisie pour conditionner l'échantillon, les dimensions de ce conditionnement sont adaptées à la géométrie de l'ouverture et à sa butée axiale correspondante dans laquelle l'échantillon est destiné à être logé.

Selon un mode de réalisation, le système selon l'invention peut en outre comporter un blindage actif qui, avec le détecteur gamma, va former un dispositif anti-Compton. Un dispositif anti-Compton est une option intéressante pour réduire les incertitudes sur la quantification par spectrométrie gamma des radionucléides émettant des photons gamma de basses énergies. En effet, en réduisant le signal Compton sur un spectre gamma, cela a pour effet de diminuer la limite de détection des radionucléides d'intérêt comme l' $^{241}$Am émettant des photons gamma à 59,54 keV.

Le dispositif anti-Compton comprend par exemple un détecteur germanium, un détecteur de type scintillateur, qui entoure le détecteur germanium, ainsi qu'un blindage en plomb, qui entoure l'ensemble formé par les deux détecteurs. La présence du blindage en plomb est nécessaire, car la densité du scintillateur n'est pas suffisante pour stopper le rayonnement environnant. Lorsqu'un photon gamma interagit dans le détecteur germanium, celui-ci peut être diffusé (c'est ce que l'on appelle la diffusion Compton). S'il s'échappe du détecteur germanium, le photon diffusé peut être détecté par le scintillateur. Il est alors retranché du spectre gamma obtenu avec le détecteur germanium, ce qui réduit le fond Compton et améliore la quantification des radionucléides.

Les performances d'un tel dispositif anti-Compton dépend de la géométrie de détection, ainsi que du scintillateur utilisé.

En ce qui concerne le procédé selon l'invention, il est basé sur la corrélation de la mesure de spectrométrie alpha et celle de spectrométrie gamma. Plus précisément, le procédé selon l'invention se base sur la détection de radionucléides identifiables et quantifiables soit par spectrométrie alpha, soit par spectrométrie gamma, soit par les deux.

Cette corrélation permet d'estimer les ratios entre les différents radionucléides par le biais de la résolution d'équations. Le couplage (ou corrélation) des mesures obtenues par spectrométrie alpha et par spectrométrie gamma et la détermination des ratios sont possibles, car les mesures sont réalisées sur le même échantillon dans une géométrie de mesure fixe.

Comme précédemment décrit, la spectrométrie alpha, dans le cadre de l'identification des radionucléides, peut être appliquée à des échantillons dans le cas de mélanges uranium/plutonium, actinides/descendants du radon, etc.

Un exemple d'un échantillon comprenant un mélange de radionucléides est traité ici afin de pouvoir identifier les différents groupes d'actinides suivants : le groupe $^{239}$Pu + $^{240}$Pu, le groupe $^{238}$Pu + $^{241}$Am et l'actinide $^{244}$Cm.

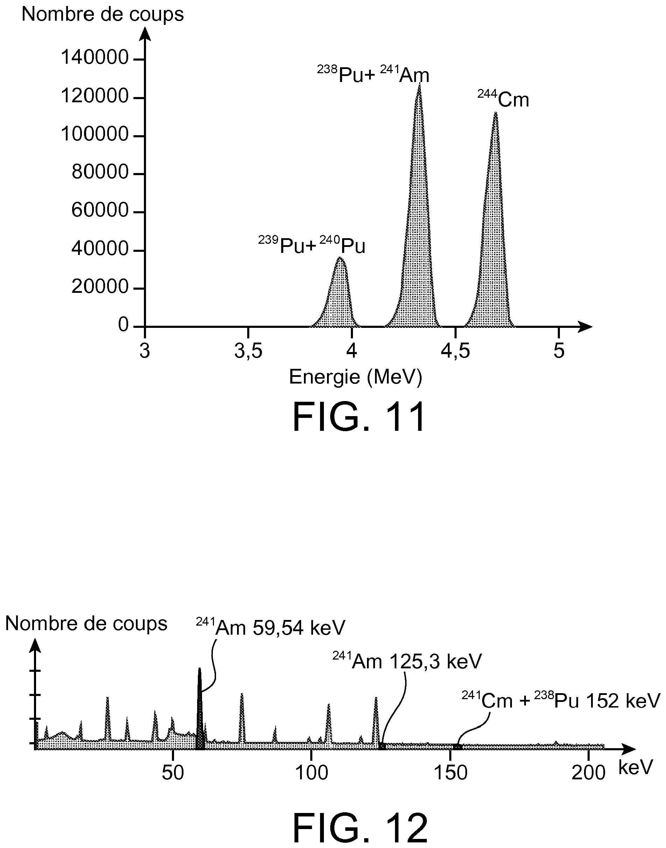

La figure 11 est un exemple de spectre que l'on peut obtenir avec le détecteur alpha fonctionnant en conditions ambiantes.

Pour chaque radionucléide, le pic alpha représente la somme de différentes raies correspondant à chaque particule alpha émise par l'échantillon. Il est impossible d'identifier la structure fine de chaque radionucléide ; il n'est également pas possible d'identifier différents radionucléides émettant des particules alpha à une énergie très proche (notamment $^{239}$Pu et $^{240}$Pu, d'une part, et $^{238}$Pu et $^{241}$Am, d'autre part).

Le tableau 1 ci-dessous énumère les énergies des particules alpha émises dans le cas du spectre alpha de la figure 11.

Tableau 1 - Énergie et intensité des particules alpha des radionucléides mis en jeu dans le spectre de la figure 11.

| Radionucléides | Énergie (keV) | Intensité de la raie (%) |
|---|---|---|
| $^{239}$Pu | 5 105,81 | 11,87 |
| | 5 143,82 | 17,14 |
| | 5 156,59 | 70,79 |
| $^{240}$Pu | 5 123,60 | 27,16 |
| | 5 168,13 | 72,74 |
| $^{238}$Pu | 5 456,30 | 28,85 |
| | 5 499,03 | 71,04 |
| $^{241}$Am | 5 388,25 | 1,66 |
| | 5 442,86 | 13,23 |
| | 5 485,56 | 84,45 |
| $^{244}$Cm | 5 762,65 | 23,3 |
| | 5 804,77 | 76,7 |

Le but est de pouvoir individualiser ces radionucléides.

Pour le besoin de quantifier le plutonium dans des déchets nucléaires par exemple, il est important de pouvoir séparer $^{238}$Pu et $^{241}$Am.

Les raies d'énergies susceptibles de nous intéresser en spectrométrie gamma et mettant en jeu $^{238}$Pu et $^{241}$Am sont les suivantes :

Tableau 2 - Raies d'énergie gamma potentielles pour le couplage de la spectrométrie gamma avec la spectrométrie alpha.

| Radionucléide | Énergie (keV) | Intensité de la raie (%) | Interférence avec d'autres radionucléides |
|---|---|---|---|
| $^{238}$Pu | 152,72 | 0,000929 | $^{244}$Cm |
| | 766,39 | 0,000022 | $^{238}$U, $^{239}$Pu |
| $^{241}$Am | 59,54 | 35,9 | - |
| | 125,3 | 0,00408 | - |
| | 208,01 | 0,000791 | $^{237}$U, $^{237}$Np |
| | 662,4 | 0,000364 | $^{137}$Cs, $^{243}$Am |

Les intensités des raies gamma sont faibles et les interférences nombreuses. Seuls les pics gamma aux énergies 59,54 keV et 125,3 keV sont exploitables, car ils ne présentent pas d'interférence avec d'autres radionucléides et, au vu des intensités, il est préférable de choisir le pic à 59,54 keV.

La figure 12 montre un exemple de spectre gamma avec identification des raies d'énergies éventuellement exploitables. On précise que les spectres sur les figures 11 et 12 sont des spectres réalisés par simulation et l'échantillon considéré est identique dans les deux cas.

Il est possible de déterminer l'activité en $^{238}$Pu en passant par la quantification de $^{241}$Am par la spectrométrie gamma, en suivant les étapes suivantes :

- détermination de l'activité de $^{241}$Am par spectrométrie gamma, par l'exploitation du pic gamma à 59,54 keV :

$$A(^{241}Am) = \text{connue} \quad (1)$$

- calcul de la contribution (en nombre de coups N) de $^{241}$Am dans le pic alpha ($^{241}$Am+$^{238}$Pu) :

$$N_\alpha(^{241}Am) = A(^{241}Am) \times \varepsilon_\alpha(^{241}Am) \times I_\alpha(^{241}Am) \times t \quad (2)$$

où $\varepsilon_\alpha$($^{241}$Am) correspond à l'efficacité alpha à l'énergie émise par les particules alpha de $^{241}$Am, $I_\alpha$($^{241}$Am) correspond à l'intensité d'émission alpha de $^{241}$Am et qui est égal à 1 puisqu'on ne discrimine pas les particules alpha émises par le même radionucléide et t correspond au temps de comptage de la spectrométrie alpha.

- détermination de la contribution (en nombre de coups N) de $^{238}$Pu dans ce même pic :

$$N_\alpha(^{238}Pu) = N_\alpha(\text{total}) - N_\alpha(^{241}Am) \quad (3)$$

où $N_\alpha$(total) correspond au nombre de coups total dans le pic alpha $^{241}$Am+$^{238}$Pu.

- détermination de l'activité de $^{238}$Pu :

$$A(^{238}Pu) = N_\alpha(^{238}Pu)/[\varepsilon_\alpha(^{238}Pu) \times I_\alpha(^{238}Pu) \times t] \quad (4)$$

où $\varepsilon_\alpha$($^{238}$Pu) correspond à l'efficacité alpha à l'énergie émise par les particules alpha de $^{238}$Pu, $I_\alpha$($^{238}$Pu) correspond à l'intensité d'émission alpha de $^{238}$Pu et t correspond au temps de comptage de la spectrométrie alpha.

Ainsi, de façon générale :

- si deux radionucléides X et Y sont en interférences dans le spectre alpha et que le radionucléide X est identifiable et quantifiable par spectrométrie gamma, alors l'activité de Y peut s'écrire :

$$A(Y) = \frac{N_\alpha(total) - \left[\dfrac{N_\gamma(X)}{\varepsilon_\gamma(X) \times I_\gamma(X) \times t_\gamma} \times \varepsilon_\alpha(X) \times I_\alpha(X) \times t_\alpha\right]}{\varepsilon_\alpha(Y) \times I_\alpha(Y) \times t_\alpha} \quad (5)$$

- de même, si deux radionucléides X et Y sont en interférences dans le spectre gamma et que le radionucléide X est identifiable et quantifiable par spectrométrie alpha, alors l'activité de Y peut s'écrire :

$$A(Y) = \frac{N_\gamma(total) - \left[\dfrac{N_\alpha(X)}{\varepsilon_\alpha(X) \times I_\alpha(X) \times t_\alpha} \times \varepsilon_\gamma(X) \times I_\gamma(X) \times t_\gamma\right]}{\varepsilon_\gamma(Y) \times I_\gamma(Y) \times t_\gamma} \quad (6)$$

Il est à noter que les temps de comptage en spectrométrie alpha $t_\alpha$ et en spectrométrie gamma $t_\gamma$ peuvent être différents.

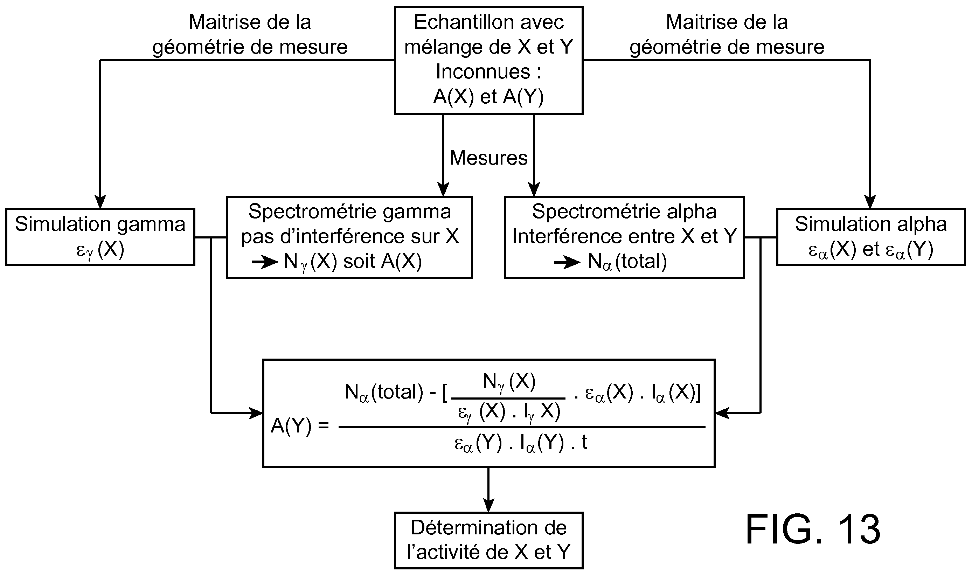

Pour résumer, les étapes à suivre pour le procédé selon l'invention sont illustrées dans la figure 13, où A(X) correspond à l'activité du radionucléide X (en Bq) ; A(Y) correspond à l'activité du radionucléide Y (en Bq) ; $N_\gamma$(X) correspond au nombre de coups dans le pic photoélectrique correspondant au radionucléide X sur le spectre gamma ; $N_\alpha$ (total) = $N_\alpha$(X) + $N_\alpha$(Y) ; $N_\alpha$(X) correspond au nombre de coups dans le pic alpha correspondant au radionucléide X sur le spectre alpha ; $N_\alpha$(Y) correspond au nombre de coups dans le pic alpha correspondant au radionucléide Y sur le spectre alpha ; $\varepsilon_\gamma$(X) correspond à l'efficacité absolue à l'énergie du pic photoélectrique caractéristique du radionucléide X en spectrométrie gamma ; $\varepsilon_\alpha$(X) correspond à l'efficacité absolue à l'énergie du pic alpha caractéristique du radionucléide X

en spectrométrie alpha ; $\varepsilon_\alpha(Y)$ correspond à l'efficacité absolue à l'énergie du pic alpha caractéristique du radionucléide Y en spectrométrie alpha ; $I_\alpha(X)$ correspond à l'intensité des particules alpha émises par le radionucléide X (soit 100 % puisque les raies ne sont pas discriminée) ; $I_\alpha(Y)$ correspond à l'intensité des particules alpha émises par le radionucléide Y (soit 100 % puisque les raies ne sont pas discriminée) ; $I_\gamma(Y)$ correspond à l'intensité des photons gamma émis par le radionucléide Y ; $t_\gamma$ correspond au temps de comptage en spectrométrie gamma et $t_\alpha$ au temps de comptage en spectrométrie alpha.

La faisabilité de l'exemple cité ci-dessus a été vérifiée en laboratoire par spectrométrie gamma, notamment la possibilité de pouvoir détecter et quantifier le $^{241}$Am noyé dans un fond de $^{137}$Cs, radionucléide en forte présence dans les déchets nucléaires.

Il est d'usage de définir, en mesures nucléaires, la notion de seuil de décision (SD) et de limite de détection (LD).

Concrètement, dans le cas de la mesure de $^{241}$Am, si le nombre de coups dans le pic à 59,54 keV est supérieur à la limite de détection, alors $^{241}$Am est quantifiable. Si le nombre de coups est inférieur à la limite de détection, mais supérieur au seuil de détection, alors $^{241}$Am est détectable, mais non quantifiable. Si le nombre de coups est inférieur au seuil de détection, alors il n'est pas possible de détecter $^{241}$Am.

Le seuil de détecteur (SD) et la limite de détection (LD) peuvent s'écrire :

$$SD = k \times (2 \times BdF)^{1/2} \qquad (7)$$

$$LD = k^2 + k \times SD \quad (8)$$

où BdF est le bruit de fond sous le pic considéré tel que BdF = $N_{brut}$ - $N_{net}$ et k est le facteur d'élargissement (k = 2) ; $N_{brut}$ est l'intégrale du pic d'énergie totale et $N_{net}$ est la surface du pic d'énergie totale après soustraction du bruit de fond correspondant aux rayonnements gamma diffusés dans l'environnement et au fond Compton des rayonnements de plus haute énergie.

Si la surface du pic $N_{net}$ est supérieur au SD, alors l'incertitude sur $N_{net}$ est :

$$\mu(N_{net}) = k \times (N_{net} + 2 \times BdF)^{1/2} \qquad (9)$$

Dans le cadre d'un cas pénalisant entrainant un ratio $^{241}$Am/$^{137}$Cs de l'ordre de 0,01, le pic gamma à 59,54 keV du $^{241}$Am permet de quantifier ce radionucléide, et ce, même au bout de 15 minutes de comptage (nombre de coups > LD).

L'incertitude sur cette valeur sera dépendante du temps de comptage, ainsi que de l'émission des échantillons.

La qualité du couplage est alors dépendante de plusieurs facteurs, notamment du temps de comptage et de l'émission des échantillons pour ce qui concerne la spectrométrie gamma et la spectrométrie alpha.

Il est à noter que l'incertitude sur l'activité estimée par spectrométrie gamma est d'autant plus importante que l'énergie des photons gamma mesurés est faible.

Les incertitudes liées à la spectrométrie alpha sont, quant à elles, plus nombreuses, notamment par rapport au choix du support de l'échantillon (choix des films, du mode de prélèvement, etc.), dont les paramètres physico-chimiques vont avoir une influence sur la dégradation du spectre alpha. En effet, plus la contamination pénétrera le support source et plus le spectre alpha sera dégradé.

Finalement, la maitrise de la géométrie de détection est le point clef de cette méthode pour limiter les sources d'incertitude.

Pour conclure, l'invention permet des applications intéressantes dans le cadre de l'instrumentation et des mesures nucléaires, notamment dans le domaine du cycle du combustible (aval du cycle principalement).

La caractérisation radiologique en (quasi) temps réel des déchets nucléaires en est la première application. Cette caractérisation radiologique permet la détermination des spectres types de chaque colis de déchets (ratios entre les radionucléides) et participe au choix de l'orientation des déchets nucléaires vers un stockage adapté en fonction de leur inventaire radiologique.

La quantification des éléments émetteurs alpha est d'une grande importance vis-à-vis des risques liés à la sureté-criticité. Jusqu'à présent, les techniques de mesures utilisées couramment n'étaient soit pas capables de quantifier, voire même d'identifier, ces radionucléides (c'est notamment le cas de la spectrométrie gamma et de la mesure neutronique), soit elles ne permettaient pas d'obtenir en temps réel les résultats et nécessitaient une préparation des échantillons longue et coûteuse, comme c'est le cas pour la spectrométrie alpha en laboratoire dans une chambre à vide.

Avec le procédé selon l'invention, il est à présent possible d'obtenir la caractérisation radiologique des déchets quasiment en temps réel et sans avoir à réaliser de préparation d'échantillon longue et couteuse en amont de la constitution du colis de déchets. Le procédé selon l'invention procure donc un gain de temps et d'argent pour caractériser de nombreux déchets.

En outre, avec le procédé selon l'invention, les mesures peuvent être réalisées sur place, au plus près des chantiers de démantèlement.

Il est à noter que cette invention peut également rentrer dans le cadre d'autres domaines, notamment dans le domaine de la protection et de la surveillance de l'environnement (lors d'accident ou de simples contrôles), mais aussi dans le domaine de la défense, du médical et de l'éducation.

**REFERENCES**

[1] FR 2 563 633, déposée le 27 avril 1984

[2] Pöllänen et al., « In-situ alpha spectrometry from air filters at ambient air pressure », Radiation Measurements, vol. 53-54, pp. 65-70, 2013

[3] CN 104215997, déposée le 3 septembre 2014

[4] FR 2 965 937, déposée le 7 octobre 2010

[5] KR1020190119272, déposée le 12 avril 2018

**Revendications**

1. Système (1) pour corréler des mesures de spectrométrie gamma et des mesures de spectrométrie alpha d'un même échantillon (6) comprenant des radionucléides, le système comprenant :

   - un détecteur gamma (4) apte à fournir des mesures de spectrométrie gamma ;
   - un détecteur alpha (3) apte à fournir des mesures de spectromètre alpha,;
   - des moyens d'acquisition et d'analyse (7) des mesures de spectrométrie alpha et de spectrométrie gamma ;

   caractérisé en ce

   le détecteur alpha (3) est équipé d'une grille de collimation ;
   et en ce que le système comprend en outre :

   - un collimateur (8) destiné à être positionné autour du détecteur gamma (4), ledit collimateur étant un corps tubulaire, coaxial à l'axe d'alignement, formé par la réunion de deux demi-tubes (8' ; 8") ; et
   - une enceinte de confinement (2) de type boite à gants, destinée à contenir l'échantillon (6) et le détecteur alpha (3) ;
   - un dispositif d'alignement (5) pour aligner, selon un axe d'alignement (14), le détecteur alpha (3), l'échantillon (6) et le détecteur gamma (4), l'échantillon étant prévu pour être disposé entre les deux détecteurs, le dispositif comprenant :

   - une base de montage (15) ayant une face supérieure et une face inférieure, et dont au moins une portion (16), délimitée par les faces supérieure et inférieure et incluant l'axe d'alignement, est en un matériau apte à laisser passer les rayonnements gamma, la base de montage (15) formant tout ou partie de la paroi inférieure de l'enceinte de confinement ;
   - des premiers et deuxièmes moyens de support, chacun étant monté sur la face supérieure de la base de montage (15), dans lequel :

   - les premiers moyens de support (17) comportent un corps (18) avec au moins une ouverture (19), chaque ouverture étant traversante selon une direction parallèle, et éventuellement coaxiale, à l'axe d'alignement et étant munie d'une butée axiale (20) configurée pour supporter l'échantillon (6) dans l'axe d'alignement (14) ;
   - les deuxièmes moyens de support (21), destinés à supporter le détecteur alpha (3), comportent un premier élément (22) fixe par rapport à la base de montage (15) et un deuxième élément (23), monté sur le premier élément (22), apte à se déplacer verticalement par rapport à ladite base de montage (15) ;
   - un élément butoir (24) formant une butée latérale contre laquelle le détecteur gamma (4) est destiné à venir se placer de manière à être dans l'axe d'alignement, ledit élément butoir étant monté sur la face inférieure de la base de montage (15).

2. Système selon la revendication 1, dans lequel l'élément butoir (24) est un corps qui s'étend longitudinalement selon la direction de l'axe d'alignement et qui a, selon une section en coupe transversale, une forme en demi-lune dont le foyer est coaxial avec l'axe d'alignement.

3. Système selon la revendication 2, dans lequel le corps de l'élément butoir (24) comporte au moins une encoche (25) configurée pour recevoir une plaque formant écran (26) et la maintenir parallèle à la face inférieure de la base de montage (15).

4. Système selon l'une quelconque des revendications 1 à 3, dans lequel le premier élément (22) des deuxièmes moyens de support (21) est un châssis, et le deuxième élément (23) des deuxièmes moyens de support (21) comprend un arbre (27), qui est monté fixe sur le premier élément (22), et des moyens de maintien (28) du détecteur alpha, par exemple une bague de serrage, qui sont montés mobile en translation verticale sur l'arbre.

5. Système selon l'une quelconque des revendications 1 à 4, dans lequel le corps (18) des premiers moyens de support (17) est un plateau qui est muni d'au moins deux ouvertures (19), et les premiers moyens de support (17) comportent en outre un arbre (29) s'étendant selon un axe parallèle à, et décalé par rapport à, l'axe d'alignement (14), le plateau étant monté rotatif sur l'arbre et chaque ouverture du plateau étant apte à être en vis-à-vis de l'axe d'alignement par rotation du plateau.

6. Système selon l'une quelconque des revendications 1 à 5, dans lequel l'enceinte de confinement (2) comporte plusieurs compartiments.

7. Système selon l'une quelconque des revendications 1 à 6, comprenant en outre une étagère (10), disposée sous l'enceinte de confinement (2), l'étagère comprenant une ouverture (11) permettant le passage du détecteur gamma (4) et ayant, sur sa face supérieure, des éléments de guidage linéaire (12), par exemple des rails de guidage, associés à chaque demi-tube (8' ; 8"), permettant de guider chaque demi-tube vers son demi-tube associé pour former le corps tubulaire du collimateur.

8. Procédé de détermination de l'activité A(X) d'un radionucléide X et de l'activité A(Y) d'un radionucléide Y émises par un échantillon (6) comportant des radionucléides, dont les radionucléides X et Y, par mise en œuvre du système (1) selon l'une quelconque des revendications 1 à 7, le procédé comprenant :

   - la mise en place de l'échantillon (6) dans une ouverture (19) du corps (18) des premiers moyens de support (17) ;
   - la mise en place du détecteur alpha (3) par rapport à l'échantillon et dans l'axe d'alignement (14) par déplacement vertical du deuxième élément (23) des deuxièmes moyens de support (21) ;
   - la mise en place du détecteur gamma (4) dans l'axe d'alignement (14) par calage du détecteur gamma contre la butée latérale de l'élément butoir (24) ;
   - l'acquisition, de préférence simultanément et pendant un même temps de comptage, d'un spectre alpha et d'un spectre gamma ;
   - dans l'un des deux spectres, sélection d'une raie d'énergie dans laquelle le radionucléide X est identifiable et n'est pas en interférences avec le ou les autres radionucléides de l'échantillon, et détermination de l'activité A(X) du radionucléide X ;
   - dans l'autre des deux spectres, sélection d'une raie d'énergie dans laquelle seuls les radionucléides X et Y sont en interférences, calcul de la contribution, en nombre de coups N(X), du radionucléide X dans ladite raie, et détermination de la contribution, en nombre de coups N(Y), du radionucléide Y dans ladite raie ;
   - détermination de l'activité A(Y).

9. Procédé selon la revendication 8, dans lequel, l'échantillon (6) étant un contaminant présent sur une face de prélèvement d'un support de prélèvement qui est en un matériau transparent aux rayonnements gamma, le procédé comprend en outre un conditionnement de l'échantillon (6), de préférence dans un compartiment de l'enceinte de confinement (2), le conditionnement comprenant un assemblage, par collage, de la face de prélèvement du support de prélèvement comportant le contaminant, avec une face d'un film de protection (31), le film de protection étant en un matériau transparent aux rayonnements alpha, au moins dans une fenêtre (32) destinée à venir en vis-à-vis du contaminant.

10. Procédé selon la revendication 9, dans lequel le support de prélèvement est en poly téréphtalate d'éthylène (PET) et comporte, sur sa face de prélèvement, une couche d'adhésif.

11. Procédé selon la revendication 8, dans lequel, l'échantillon (6) étant un contaminant présent sur une face de prélèvement d'un support de prélèvement qui est en un matériau transparent aux rayonnements gamma, le procédé comprend en outre le conditionnement de l'échantillon (6), de préférence dans un compartiment de l'enceinte de confinement (2), le conditionnement comprenant :

- un dépôt de l'échantillon (6) sur une face d'un support plan (30) en un matériau transparent aux rayonnements gamma ;
- un assemblage, par collage, de la face du support plan (30) sur laquelle est déposé l'échantillon, avec une face d'un film de protection (31), le film de protection étant en un matériau transparent aux rayonnements alpha, au moins dans une fenêtre (32) destinée à venir en vis-à-vis du contaminant.

12. Procédé selon la revendication 11, dans lequel la face du support plan (30) comporte une couche d'adhésif, qui est présente avant le dépôt de l'échantillon (6).

13. Procédé selon la revendication 11 ou la revendication 12, dans lequel le support plan (30) est en poly téréphtalate d'éthylène (PET).

14. Procédé selon l'une quelconque des revendications 9 à 13, dans lequel au moins la fenêtre (32) du film de protection (31), de préférence le film de protection dans sa totalité, est en poly téréphtalate d'éthylène (PET).

15. Procédé selon la revendication 14, dans lequel la fenêtre (32) du film de protection en PET a une épaisseur de 6 $\mu$m ou moins.

**Patentansprüche**

1. System (1) zum Korrelieren von Gammaspektrometriemessungen und Alphaspektrometriemessungen derselben Probe (6), die Radionuklide umfasst, wobei das System umfasst:

- einen Gammadetektor (4), der in der Lage ist, Gammaspektrometriemessungen zu liefern;
- einen Alphadetektor (3), der in der Lage ist, Alphaspektrometermessungen zu liefern;
- Mittel zum Erfassen und Analysieren (7) der Alphaspektrometrie- und Gammaspektrometriemessungen;

**dadurch gekennzeichnet,**

**dass** der Alphadetektor (3) mit einem Kollimationsgitter ausgestattet ist;
und **dass** es weiter umfasst:

- einen Kollimator (8), der dazu bestimmt ist, um den Gammadetektor (4) herum positioniert zu werden, wobei der Kollimator ein rohrförmiger Körper, koaxial zur Ausrichtungsachse, und durch die Vereinigung von zwei Halbrohren (8'; 8") gebildet ist;
- eine Einschlusskammer (2) vom Typ einer Handschuhbox, die dazu bestimmt ist, die Probe (6) und den Alphadetektor (3) zu enthalten; und
- eine Ausrichtungsvorrichtung (5) zum Ausrichten des Alphadetektors (3), der Probe (6) und des Gammadetektors (4) gemäß einer Ausrichtungsachse (14), wobei die Probe dazu vorgesehen ist, zwischen den zwei Detektoren angeordnet zu werden, wobei die Vorrichtung umfasst:

- eine Montagebasis (15), die eine Oberseite und eine Unterseite aufweist, und von der mindestens ein Abschnitt (16), der von der Ober- und der Unterseite begrenzt wird und die Ausrichtungsachse einschließt, aus einem Material besteht, das in der Lage ist, die Gammastrahlungen durchzulassen, wobei die Montagebasis (15) die ganze oder einen Teil der unteren Wand der Einschlusskammer bildet;
- erste und zweite Trägermittel, die jeweils an der Oberseite der Montagebasis (15) montiert sind, wobei:

- die ersten Trägermittel (17) einen Körper (18) mit mindestens einer Öffnung (19) umfassen, wobei jede Öffnung in einer Richtung, die zur Ausrichtungsachse parallel und gegebenenfalls koaxial ist, durchgehend und mit einem axialen Anschlag (20) versehen ist, der dafür konfiguriert ist, die Probe (6) in der Ausrichtungsachse (14) zu tragen;
- die zweiten Trägermittel (21), die dazu bestimmt sind, den Alphadetektor (3) zu tragen, ein erstes Element (22), das in Bezug auf die Montagebasis (15) fest ist, und ein zweites Element (23) umfassen, das am ersten Element (22) montiert und in der Lage ist, sich vertikal in Bezug auf die Montagebasis (15) zu verlagern;
- ein Anschlagelement (24), das einen seitlichen Anschlag bildet, an dem sich der Gammadetektor (4) bestimmungsgemäß platzieren soll, um sich in der Ausrichtungsachse zu befinden, wobei das Anschlagelement an der Unterseite der Montagebasis (15) montiert ist.

2. System nach Anspruch 1, wobei das Anschlagelement (24) ein Körper ist, der sich längs in der Richtung der Ausrichtungsachse erstreckt und der in einem Querschnitt eine Halbmondform aufweist, deren Brennpunkt zur Ausrichtungsachse koaxial ist.

3. System nach Anspruch 2, wobei der Körper des Anschlagelements (24) mindestens eine Kerbe (25) umfasst, die dafür konfiguriert ist, eine Platte, die einen Schirm (26) bildet, aufzunehmen und sie parallel zur Unterseite der Montagebasis (15) zu halten.

4. System nach einem der Ansprüche 1 bis 3, wobei das erste Element (22) der zweiten Trägermittel (21) ein Rahmen ist, und das zweite Element (23) der zweiten Trägermittel (21) eine Welle (27), die fest am ersten Element (22) montiert ist, und Trägermittel (28) des Alphadetektors, zum Beispiel einen Klemmring, umfasst, die vertikal verschiebebeweglich auf der Welle montiert sind.

5. System nach einem der Ansprüche 1 bis 4, wobei der Körper (18) der ersten Trägermittel (17) eine Platte ist, die mit mindestens zwei Öffnungen (19) versehen ist, und die ersten Trägermittel (17) weiter eine Welle (29) umfassen, die sich entlang einer Achse erstreckt, die zur Ausrichtungsachse (14) parallel und in Bezug auf diese versetzt ist, wobei die Platte drehbar auf der Welle montiert ist und jede Öffnung der Platte in der Lage ist, durch Drehung der Platte der Ausrichtungsachse gegenüber zu liegen.

6. System nach einem der Ansprüche 1 bis 5, wobei die Einschlusskammer (2) mehrere Fächer umfasst.

7. System nach einem der Ansprüche 1 bis 6, das weiter ein Regal (10) umfasst, das unter der Einschlusskammer (2) angeordnet ist, wobei das Regal eine Öffnung (11) umfasst, die den Durchtritt des Gammadetektors (4) ermöglicht, und an seiner Oberseite lineare Führungselemente (12), zum Beispiel Führungsschienen, aufweist, die jedem Halbrohr (8'; 8") zugeordnet sind und es ermöglichen, jedes Halbrohr zu dem ihm zugeordneten Halbrohr zu führen, um den rohrförmigen Körper des Kollimators zu bilden.

8. Verfahren zum Bestimmen der Aktivität A(X) eines Radionuklids X und der Aktivität A(Y) eines Radionuklids Y, die von einer Probe (6), die Radionuklide, darunter die Radionuklide X und Y, umfasst, emittiert werden, durch Einsatz des Systems (1) nach einem der Ansprüche 1 bis 7, wobei das Verfahren umfasst:

- Platzieren der Probe (6) in einer Öffnung (19) des Körpers (18) der ersten Trägermittel (17);
- Platzieren des Alphadetektors (3) in Bezug auf die Probe und in der Ausrichtungsachse (14) durch vertikales Verlagern des zweiten Elements (23) der zweiten Trägermittel (21);
- Platzieren des Gammadetektors (4) in der Ausrichtungsachse (14) durch Verkeilen des Gammadetektors am seitlichen Anschlag des Anschlagelements (24);
- Erfassen, vorzugsweise gleichzeitig und während derselben Zählzeit, eines Alphaspektrums und eines Gammaspektrums;
- Auswählen einer Energielinie, in der das Radionuklid X identifizierbar ist und nicht mit dem oder den anderen Radionukliden der Probe in Interferenz steht, in einem der zwei Spektren, und Bestimmen der Aktivität A(X) des Radionuklids X;
- Auswählen einer Energielinie, in der nur die Radionuklide X und Y in Interferenz stehen, im anderen der zwei Spektren, Berechnen des Beitrags, in Anzahl der Schläge N(X), des Radionuklids X in der Linie, und Bestimmen des Beitrags, in Anzahl der Schläge N(Y), des Radionuklids Y in der Linie;
- Bestimmen der Aktivität A(Y).

9. Verfahren nach Anspruch 8, wobei die Probe (6) ein Kontaminant ist, der auf einer Entnahmeseite eines Entnahmeträgers vorliegt, der aus einem Material besteht, das für die Gammastrahlungen durchlässig ist, wobei das Verfahren weiter ein Aufbereiten der Probe (6) umfasst, vorzugsweise in einem Fach der Einschlusskammer (2), wobei das Aufbereiten ein Zusammenfügen, durch Verkleben, der Entnahmeseite des Entnahmeträgers, die den Kontaminanten umfasst, mit einer Seite eines Schutzfilms (31) umfasst, wobei der Schutzfilm aus einem Material besteht, das für die Alphastrahlungen durchlässig ist, mindestens in einem Fenster (32), das dazu bestimmt ist, dem Kontaminanten gegenüber zu kommen.

10. Verfahren nach Anspruch 9, wobei der Entnahmeträger aus Polyethylenterephthalat (PET) besteht und auf seiner Entnahmeseite eine Klebstoffschicht umfasst.

11. Verfahren nach Anspruch 8, wobei die Probe (6) ein Kontaminant ist, der auf einer Entnahmeseite eines Entnahmeträgers vorliegt, der aus einem Material besteht, das für die Gammastrahlungen durchlässig ist, wobei das Verfahren weiter das Aufbereiten der Probe (6), vorzugsweise in einem Fach der Einschlusskammer (2), umfasst, wobei das Aufbereiten umfasst:

- Abscheiden der Probe (6) auf einer Seite eines ebenen Trägers (30) aus einem Material, das für die Gammastrahlungen durchlässig ist;
- Zusammenfügen, durch Verkleben, der Seite des ebenen Trägers (30), auf der die Probe abgeschieden ist, mit einer Seite eines Schutzfilms (31), wobei der Schutzfilm aus einem Material besteht, das für die Alphastrahlungen durchlässig ist, mindestens in einem Fenster (32), das dazu bestimmt ist, dem Kontaminanten gegenüber zu kommen.

12. Verfahren nach Anspruch 11, wobei die Seite des ebenen Trägers (30) eine Klebstoffschicht umfasst, die vor dem Abscheiden der Probe (6) vorliegt.

13. Verfahren nach Anspruch 11 oder Anspruch 12, wobei der ebene Träger (30) aus Polyethylenterephthalat (PET) besteht.

14. Verfahren nach einem der Ansprüche 9 bis 13, wobei mindestens das Fenster (32) des Schutzfilms (31), vorzugsweise der Schutzfilm in seiner Gesamtheit, aus Polyethylenterephthalat (PET) besteht.

15. Verfahren nach Anspruch 14, wobei das Fenster (32) des Schutzfilms aus PET eine Dicke von 6 $\mu$m oder weniger aufweist.


**Claims**

1. A system (1) for correlating alpha spectrometry measurements and alpha spectrometry measurements of a same sample (6) comprising radionuclides, the system comprising:

- a gamma detector (4) able to provide gamma spectrometry measurements;
- an alpha detector (3) able to provide alpha spectrometry measurements;
- means (7) for acquiring and analysing alpha spectrometry and gamma spectrometry measurements;

**characterised in that**:

- the alpha detector (3) is equipped with a collimation grid;

and **in that** it further comprises:

- a collimator (8) intended to be positioned around the gamma detector (4), said collimator being a tubular body, coaxial with the alignment axis, formed by joining two half-tubes (8'; 8"); and
- a glove box type containment vessel (2), intended to contain the sample (6) and the alpha detector (3),
- an alignment device (5) to align, along an alignment axis (14), the alpha detector (3), the sample (6) and the gamma detector (4), the sample being intended to be disposed between the two detectors, the device comprising:

- a mounting base (15) having an upper face and a lower face, and at least one portion (16) of which, delimited by the upper and lower faces and including the alignment axis, is made of a material able to let the gamma radiations pass, the mounting base (15) forming all or part of the lower wall of the containment vessel;
- first and second support means, each being mounted over the upper face of the mounting base (15), wherein:

- the first support means (17) include a body (18) with at least one opening (19), each opening being open through according to a direction parallel to, and possibly coaxial with, the alignment axis and being provided with an axial abutment (20) configured to support the sample (6) in the alignment axis (14);
- the second support means (21), intended to support the alpha detector (3), include a first element (22) fixed with respect to the mounting base (15) and a second element (23), mounted on the first element (22), able to move vertically relative to said mounting base (15);

- a stop element (24) forming a lateral abutment against which the gamma detector (4) is intended to be placed so as to be in the alignment axis, said stop element being mounted on the lower face of the mounting base (15).

2. The device according to claim 1, wherein the stop element (24) is a body which extends longitudinally according to the direction of the alignment axis and which has, according to a cross-section, a half-moon like shape whose focus is coaxial with the alignment axis.

3. The device according to claim 2, wherein the body of the stop element (24) includes at least one notch (25) configured to receive a tray (26) forming a screen and hold it parallel to the lower face of the mounting base (15).

4. The device according to any one of claims 1 to 3, wherein the first element (22) of the second support means (21) is a frame, and the second element (23) of the second support means (21) comprises a shaft (27), which is fixedly mounted on the first element (22), and means (28) for holding the alpha detector, for example a clamping ring, which are mounted movable in vertical translation on the shaft.

5. The device according to any one of claims 1 to 4, wherein the body (18) of the first support means (17) is a tray which is provided with at least two openings (19), and the first support means (17) further include a shaft (29) extending according to an axis parallel, and offset with respect, to the alignment axis (14), the tray being rotatably mounted on the shaft and each opening of the tray being able to be opposite the alignment axis by rotation of the tray.

6. The system according to any of claims 1 to 6, wherein the containment vessel (2) includes several compartments.

7. The system according to any of claims 1 to 6, further comprising a shelf (10), disposed below the containment vessel (2), the shelf comprising an opening (11) enabling the passage of the gamma detector (4) and having, over its upper face, linear guide elements (12), for example guide rails, associated with each half-tube (8'; 8"), allowing guiding each half-tube towards its associated half-tube so as to form the tubular body of the collimator.

8. A method for determining the activity A(X) of a radionuclide X and the activity A(Y) of a radionuclide Y emitted by a sample (6) including radionuclides, including the radionuclides X and Y, by implementation of the system (1) according to any one of claims 1 to 7, the method comprising:

- placing the sample (6) in an opening (19) of the body (18) of the first support means (17);
- placing the alpha detector (3) with respect to the sample and in the alignment axis (14) by vertical movement of the second element (23) of the second support means (21);
- placing the gamma detector (4) in the alignment axis (14) by wedging the gamma detector against the lateral abutment of the stop element (24);
- acquiring, preferably simultaneously and during the same counting time, an alpha spectrum and a gamma spectrum;
- in one of the two spectra, selecting an energy line in which the radionuclide X is identifiable and is not in interference with the other radionuclide(s) of the sample, and determining the activity A(X) of the radionuclide X;
- in the other one of the two spectra, selecting an energy line in which only the radionuclides X and Y are in interference, calculating the contribution, in number of pulses N(X), of the radionuclide X in said line, and determining the contribution, in number of pulses N(Y), of the radionuclide Y in said line;
- determining the activity A(Y).

9. The method according to claim 8, wherein, the sample (6) being a contaminant present over a sampling face of a sampling support which is made of a material transparent to gamma radiations, the method further comprises a packaging the sample (6), preferably in a compartment of the containment vessel (2), the packaging comprising assembling, by gluing, the sampling face of the sampling support including the contaminant, with a face of a protective film (31), the protective film being made of a material transparent to alpha radiations, at least in a window (32) intended to face the contaminant.

10. The method according to claim 9, wherein the sampling support is made of polyethylene terephthalate (PET) and includes, over its sampling face, an adhesive layer.

11. The method according to claim 8, wherein, the sample (6) being a contaminant present over a sampling face of a sampling support which is made of a material transparent to gamma radiations, the method further comprises the packaging the sample (6), preferably in a compartment of the containment vessel (2), the packaging comprising:

- depositing the sample (6) over one face of a planar support (30) made of a material transparent to gamma radiations;
- assembling, by gluing, the face of the planar support (30) over which the sample is deposited, with a face of a protective film (31), the protective film being made of a material transparent to alpha radiations, at least in an aperture (32) intended to face the contaminant.

12. The method according to claim 11, wherein the face of the planar support (30) includes an adhesive layer, which is present before the deposition of the sample (6).

13. The method according to claim 11 or claim 12, wherein the planar support (30) is made of polyethylene terephthalate (PET).

14. The method according to any one of claims 9 to 13, wherein at least the aperture (32) of the protective film (31), preferably the protective film in its entirety, is made of polyethylene terephthalate (PET).

15. The method according to claim 14, wherein the aperture (32) of the PET protective film has a thickness of 6 $\mu$m or less.

FIG. 1

FIG. 2

FIG. 3

FIG. 4

FIG. 5

FIG. 6a

FIG. 6b

FIG. 6c

FIG. 7a

FIG. 7b

FIG. 8a

FIG. 8b

FIG. 8c

FIG. 9

FIG. 10

Nombre de coups

FIG. 11

FIG. 12

```
                    ┌─────────────────┐
Maitrise de la      │ Echantillon avec │      Maitrise de la
géométrie de mesure │ mélange de X et Y│      géométrie de mesure
                    │ Inconnues :      │
                    │ A(X) et A(Y)     │
                    └─────────────────┘
                           │ Mesures
```

Maitrise de la géométrie de mesure

Echantillon avec mélange de X et Y Inconnues : A(X) et A(Y)

Maitrise de la géométrie de mesure

Mesures

Simulation gamma $\varepsilon_\gamma (X)$

Spectrométrie gamma pas d'interférence sur X → $N_\gamma(X)$ soit A(X)

Spectrométrie alpha Interférence entre X et Y → $N_\alpha(total)$

Simulation alpha $\varepsilon_\alpha(X)$ et $\varepsilon_\alpha(Y)$

$$A(Y) = \frac{N_\alpha(total) - \left[ \dfrac{N_\gamma(X)}{\varepsilon_\gamma(X) . I_\gamma X)} . \varepsilon_\alpha(X) . I_\alpha(X) \right]}{\varepsilon_\alpha(Y) . I_\alpha(Y) . t}$$

Détermination de l'activité de X et Y

FIG. 13

## RÉFÉRENCES CITÉES DANS LA DESCRIPTION

**Documents brevets cités dans la description**

- FR 2563633
- CN 104215997
- FR 2965937
- KR 1020190119272

**Littérature non-brevet citée dans la description**

- **PÖLLÄNEN et al.** In-situ alpha spectrometry from air filters at ambient air pressure. *Radiation Measurements*, 2013, vol. 53 (54), 65-70